# EUROPEAN PATENT APPLICATION

(11) **EP 3 330 138 A1**
(43) Date of publication of application: **06.06.2018**
(21) Application number: 16830535.7
(22) Date of filing: 26.07.2016
(51) Int. Cl.: B60S 1/38

(54) **WIPER ASSEMBLY**

(30) Priority: 27.07.2015 JP 2015148170
(71) Applicant: Nippon Wiper Blade Co., Ltd., Kazo-shi, Saitama 347-8585 (JP)
(72) Inventor: SHIMIZU Yuta, Kazo-shi Saitama 347-8585 (JP); AOKI Yoshiaki, Kazo-shi Saitama 347-8585 (JP)
(74) Representative: Barker Brettell LLP
(86) International application number: PCT/JP2016/071939
(87) International publication number: WO 2017/018430

(57) **Abstract**

There is provided a wiper assembly that includes a wiper arm configured to retain a wiper blade in a state where at least a part of the wiper blade is housed within a blade housing section, the wiper assembly being configured so that a reduction in weight and a lowering of the manufacturing cost can be achieved. In a wiper assembly 1 configured to retain a wiper blade 3 by a wiper arm 2, by housing a support section 32 of the wiper blade 3 in a blade housing section 27 provided in an arm main body 23 of the wiper arm 2, the arm main body 23 is formed of metal, while the support section 32 is formed of resin. A plurality of projections 37 are provided on side surfaces 34 of the support section 32, and these projections 37 are made to come into contact with inward-facing surfaces 26B of side walls 26 of the arm main body 23.

## Description

### [Technical Field]

The present invention relates to a wiper assembly that includes a wiper blade and a wiper arm, and more specifically to a wiper assembly of a type where the wiper arm has a blade housing section configured to house at least a part of the wiper blade.

### [Background Art]

In a wiper assembly, a blade housing section is included in a wiper arm, and retention of a wiper blade is performed by the wiper arm in the state where at least a part of the wiper blade is housed within the blade housing section. Conventionally, in such a wiper assembly, the strength of the entire wiper assembly is maintained, by forming the entire wiper arm, and the portion excluding the wiping member (a blade section made of rubber) in the wiper blade, of a metallic material.

### [Citation List]

### [Patent Literature]

Patent Literature 1: Japanese Laid-Open Patent Application No. 2006-76523

### [Summary of Invention]

### [Technical Problem]

In such a conventional wiper assembly, since the wiper arm and the wiper blade are made of metal, the strength of the entire wiper assembly can be secured. However, since metallic materials are heavy and expensive, there is a problem that the wiper assembly is heavy in weight, and the manufacturing cost is increased.

In view of the foregoing, it is an object of the present invention to provide a wiper assembly including a wiper arm that retains a wiper blade in a state where at least a part of the wiper blade is housed within a blade housing section, the wiper assembly being configured so that a reduction in weight and a lowering of the manufacturing cost can be achieved.

### [Solution to Problem]

The present invention provide a wiper assembly comprising a wiper blade and a wiper arm adapted to support the wiper blade, the wiper blade including a wiping section adapted to wipe a surface to be wiped and a support section supporting the wiping section, the wiper arm including a blade housing section configured to house at least a part of the support section, wherein a portion constituting the blade housing section of the wiper arm is formed of a metallic material, and wherein the support section of the wiper blade is formed of a non-metallic material.

The non-metallic material may be resin.

Projections may be provided on one of the support section and the wiper arm and may be adapted to contact with the other of the support section and the wiper arm.

The wiper blade may be rotatably connected to the wiper arm about a connection section, and the projections provided on one of the support section and the wiper arm are disposed at positions farthest from the connection section in a range where the projections are kept in contact with the other of the support section and the wiper arm during the rotation of the wiper blade with respect to the wiper arm.

### [Advantageous Effects of Invention]

According to the present invention, in the wiper assembly (for example, wiper assembly 1), the portion (for example, arm main body 23) constituting the blade housing section (for example, blade housing section 27) of the wiper arm (for example, wiper arm 2) is formed of a metallic material, and the support section (for example, support section 23) of the wiper blade (for example, wiper blade 3) is formed of a non-metallic material. Therefore, the support section of the wiper blade can be appropriately protected by the wiper arm made of metal, and the structural strength of the wiper assembly can be secured, while the weight and the manufacturing cost of the wiper arm can be reduced by forming the support section of the wiper blade by a lightweight and inexpensive non-metallic material such as resin.

Moreover, the projections (for example, projections 37) are provided on one of the support section and the wiper arm and are in contact with the other of the support section and the wiper arm. The support section of the wiper blade is thus retained at an appropriate position within the blade housing section without rattling. Therefore, any damage or the like due to rattling of the wiper blade 3 can be effectively prevented. In addition, the support section and the wiper arm are contacted to each other only at the projections so that the contact area can be reduced. Therefore, the frictional resistance during the rotation of the wiper blade can be reduced, and an appropriate rotation operation of the wiper blade can be secured.

Moreover, the wiper blade is rotatably connected to the wiper arm about a connection section (for example, connection recesses 35 and connection protrusions 43), and the projections are provided at positions farthest from the connection section in a range where the projections are kept in contact with the other of the support section and the wiper arm during the rotation of the wiper blade with respect to the wiper arm. Accordingly, when an external force is applied to the wiper blade, the external force can be received at the projections separated away from the connection section as the support point. Therefore, the load applied to the wiper blade can be reduced, and damage to the wiper blade can be appropriately prevented.

### [Brief Description of Drawings]

[Figure 1] Figure 1 is a perspective view showing a wiper assembly in an embodiment of the present invention.
[Figure 2] Figure 2 is an exploded perspective view showing the wiper assembly of the same embodiment.
[Figure 3] Figure 3 is a front view showing the wiper assembly of the same embodiment.
[Figure 4] Figure 4 is a plan view showing the wiper assembly of the same embodiment.
[Figure 5] Figure 5 is a bottom view showing the wiper assembly of the same embodiment.
[Figure 6] Figure 6 is a front view showing a wiper blade of the same embodiment.
[Figure 7] Figure 7 is a plan view showing the wiper blade of the same embodiment.
[Figure 8] Figure 8 is a bottom view showing the wiper blade of the same embodiment.
[Figure 9] Figure 9 is a perspective view showing a clip member of the same embodiment.
[Figure 10] Figure 10 is a front view showing the clip member of the same embodiment.
[Figure 11] Figure 11 is a side view showing the clip member of the same embodiment.
[Figure 12] Figure 12 is a plan view showing the clip member of the same embodiment.
[Figure 13] Figure 13 is a bottom view showing the clip member of the same embodiment.
[Figure 14] Figure 14 is a perspective view showing a part of the wiper assembly of the same embodiment, and shows a state prior to the clip member being mounted on a clip mounting section of a wiper arm.
[Figure 15] Figure 15 is a perspective view showing a part of the wiper assembly of the same embodiment, and shows a state where the clip member is inserted into a position adjacent to the clip mounting section of the wiper arm.
[Figure 16] Figure 16 is a perspective view showing a part of the wiper assembly of the same embodiment, and shows a state where the clip member has been mounted on the clip mounting section of the wiper arm.

### [Description of Embodiments]

Hereinafter, embodiments of the present invention will be described on the basis of the attached drawings.

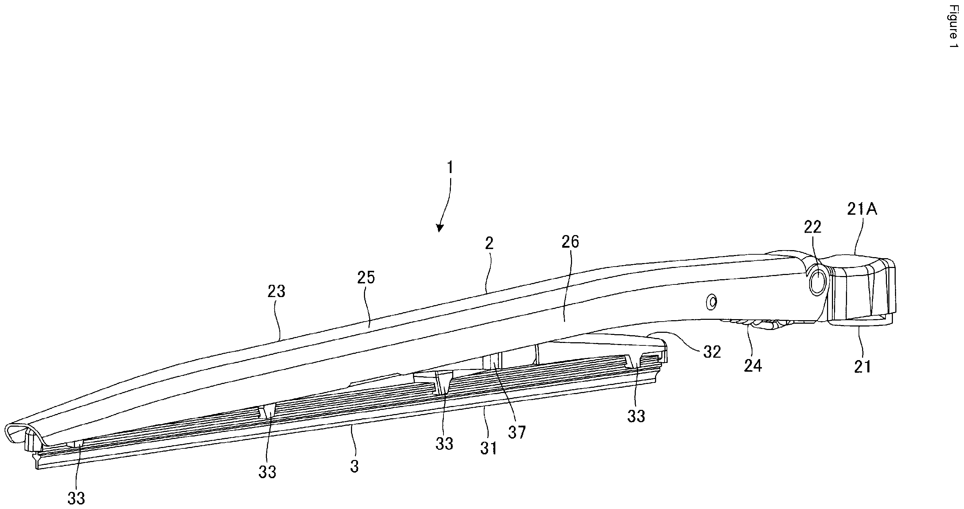

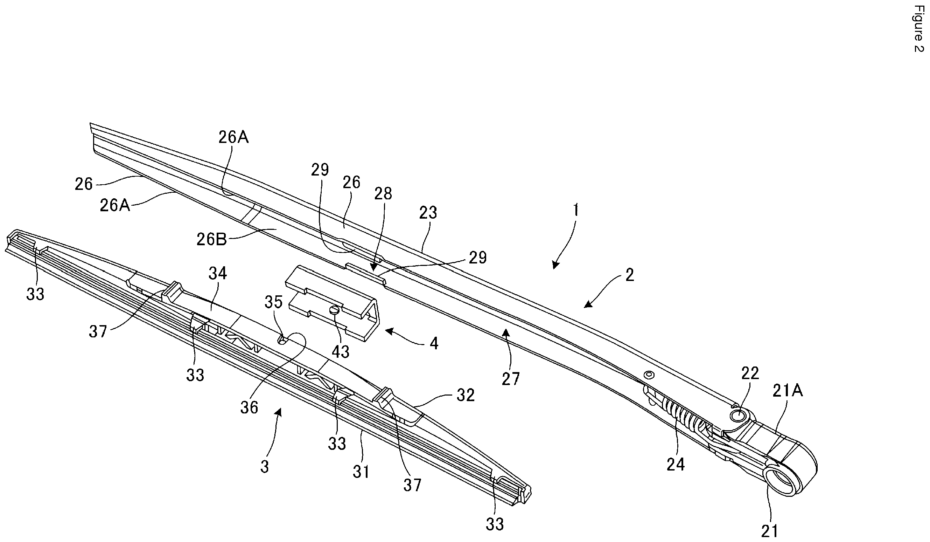

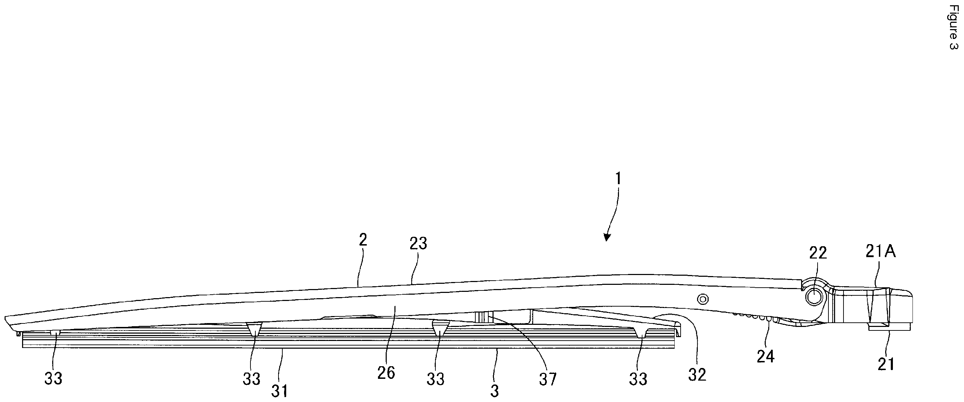

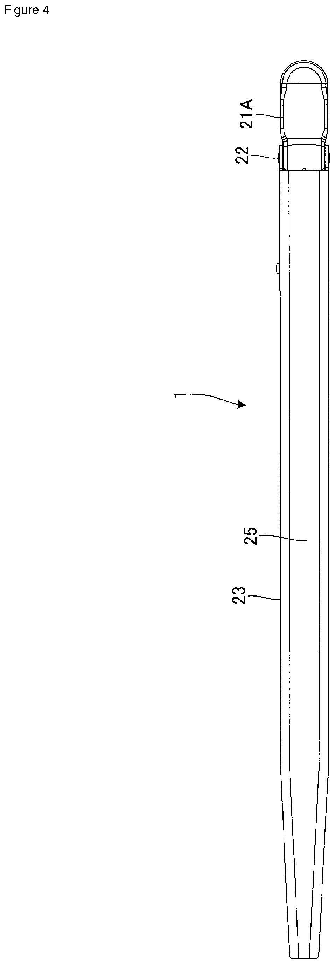

Figure 1 to Figure 5 show an entire configuration of a wiper assembly 1 in an embodiment of the present invention. As illustrated, the wiper assembly 1 includes a wiper arm 2, and a wiper blade 3 retained by the wiper arm 2.

The wiper arm 2 includes an arm head 21 on the base end side, and an arm main body 23 rotatably connected via a connection pin 22 with respect to the arm head 21. In the present embodiment, the arm head 21, the connection pin 22, and the arm main body 23 are all formed of metal. Note that, the arm head 21 is covered by a head cover 21A.

A spring 24 is provided between the arm head 21 and the arm main body 23. In this way, the spring 24 provides an appropriate force with respect to the rotation of the arm main body 23 around the connection pin 22, at the time when using the wiper assembly 1. As a result of this, the wiper blade 3 supported by the arm main body 23 is pressed by an appropriate pressing force to a surface to be wiped (for example, a glass surface of a vehicle).

The arm main body 23 is an elongated member that constitutes a main member of the wiper arm 2, and is constituted of a top wall 25, and side walls 26 on both sides of the top wall 25 that extend downward from both sides of the long direction. Moreover, a space enclosed by the top wall 25 and both of the side walls 26 becomes a blade housing section 27 that houses a support section 32 of the wiper blade 3.

A clip mounting section 28, on which a clip member 4 is mounted, is provided at an approximately central part of the long direction of the blade housing section 27. A pair of retention sections 29 for retaining the mounted clip member 4 are provided on the clip mounting section 28. The retention sections 29 respectively extend at right angles with respect to the side walls 26, from lower edges 26A of each of the side walls 26 toward the side wall 26 on the opposite side.

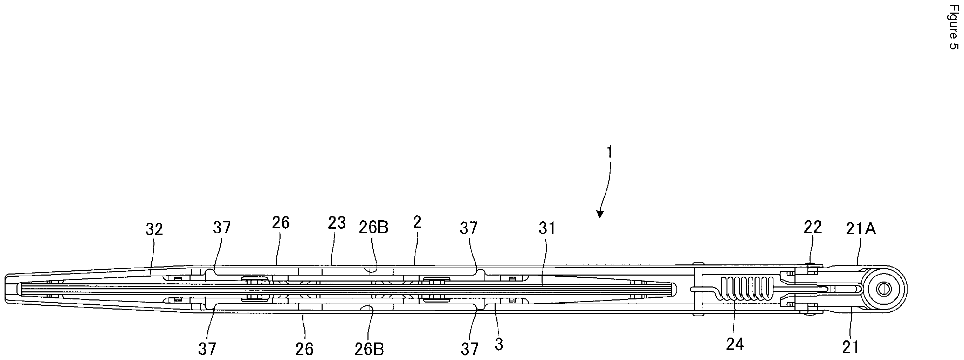

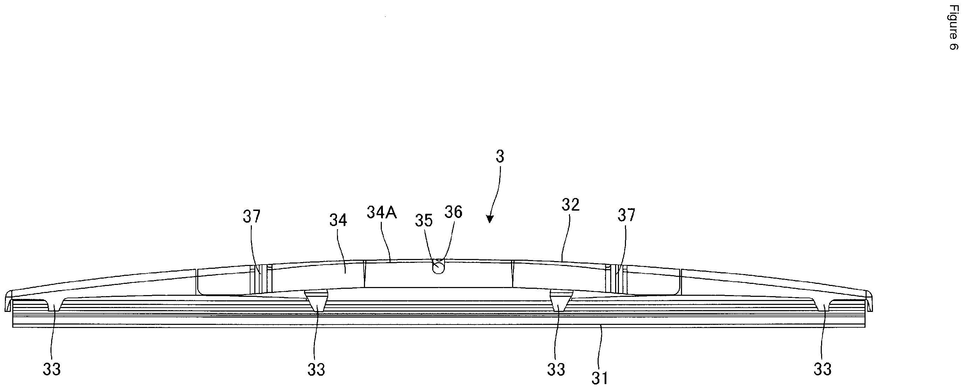

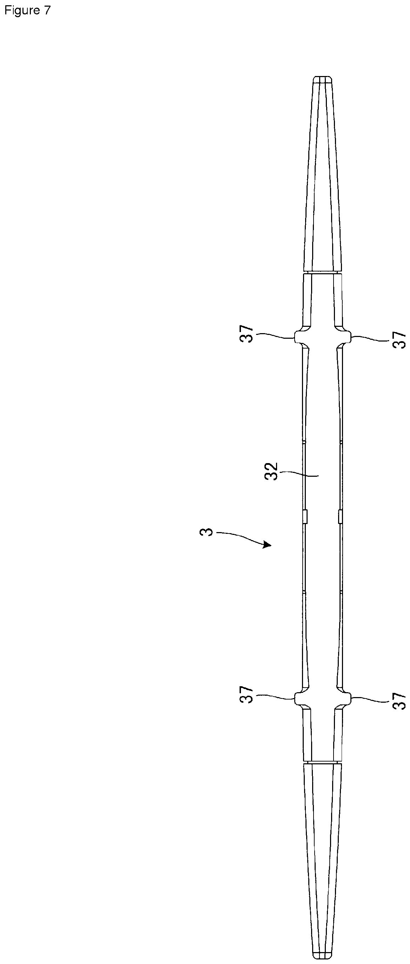

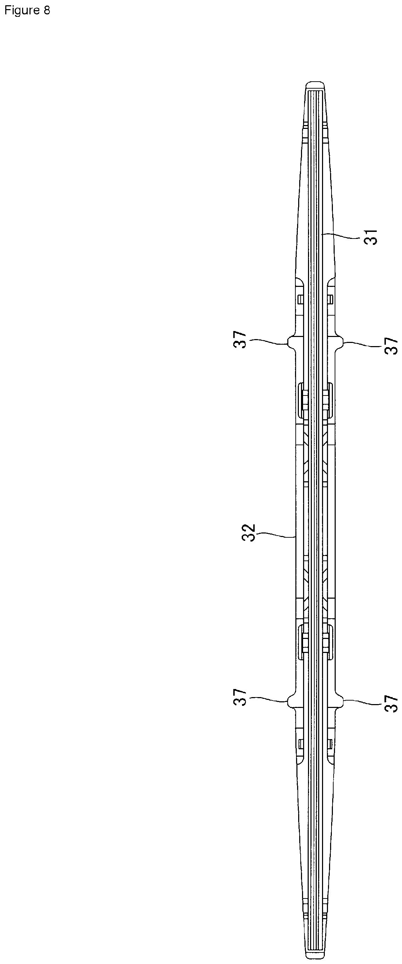

As shown in Figure 5 to Figure 8, the wiper blade 3 includes a blade section 31, and the support section 32 that supports the blade section 31 from above. The blade section 31 is an elongated wiping member for wiping a surface to be wiped, and is formed from rubber.

The support section 32 is an elongated member that has a length approximately the same as that of the blade section 31, and is entirely formed from resin. A plurality of claw parts 33 that extend facing downward are provided at necessary positions of the support section 32, and the blade section 31 is supported by these claw parts 33.

Connection recesses 35 are respectively formed at approximately central parts of the long direction on both side surfaces 34 of the support section 32. Each of the connection recesses 35 is formed near the upper edge 34A of each of the side surfaces 34, and introduction grooves 36 are respectively formed between the upper edges 34A of each of the connection recesses 35. In this way, at the time when the wiper blade 3 is attached with respect to the clip member 4, connection protrusions 43 of the clip member 4 will be guided into the connection recesses 35 through these introduction grooves 36.

Moreover, a plurality of projections 37 are formed on the side walls 34 on both sides of the support section 32. In the present embodiment, a total of 4 projections 37 are provided, one each on both sides of the long direction of each of the connection recesses 35. In this way, at the time when the wiper blade 3 is mounted on the arm main body 2, these projections 37 will come into contact with inward-facing surfaces 26B (surfaces facing the blade housing section 27 side) of both of the side walls 26 of the arm main body 2, and as a result, the support section 32 of the wiper blade 3 will be stably retained at an appropriate position within the blade housing section 27 of the arm main body 2. Therefore, the structural strength of the wiper assembly 1 can be improved.

On the other hand, since the contact portions of the wiper blade 3 and the wiper arm 2 are the projections 37, the contact area between the wiper blade 3 and the wiper arm 2 can be reduced. Therefore, since frictional resistance at the time of rotating the wiper blade 3 can be reduced, an appropriate rotation operation of the wiper blade 3 will not be obstructed, at the time when using the wiper assembly 1.

The projections 37 are provided at positions separated the farthest in the long direction from the connection recesses 35, in a range where continuously in contact with the inward-facing surfaces 26B of the side walls 26 of the arm main body 23 at the time when the wiper blade 3 rotates with respect to the wiper arm 2. In this way, in the case where an external force is applied in a horizontal direction with respect to the wiper blade 3, this external force will be received at the projections 37 at positions sufficiently separated from the connection recesses 35 that are support points. Therefore, the load applied to the support section 32 can be reduced, and damage to the support section 32 can be appropriately prevented.

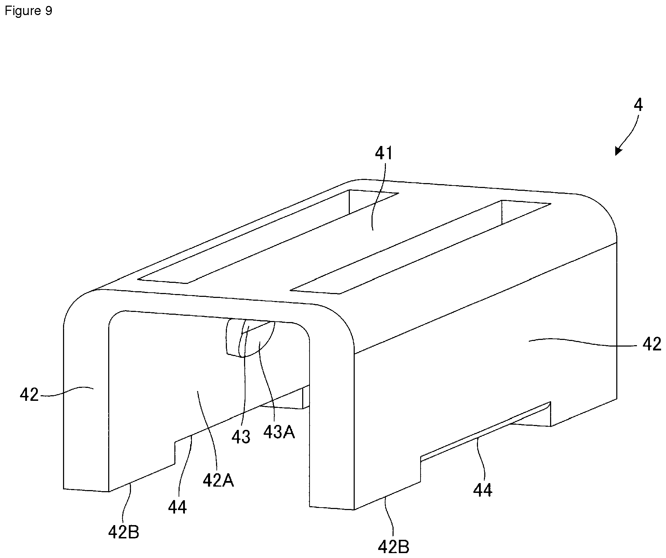

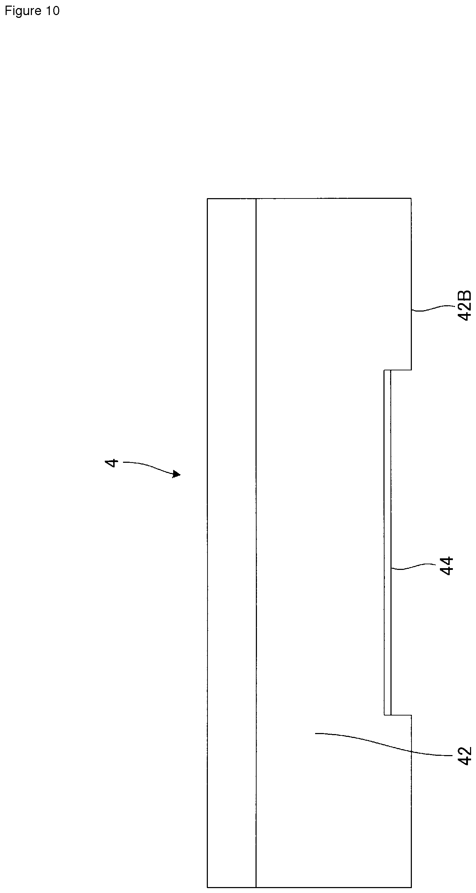

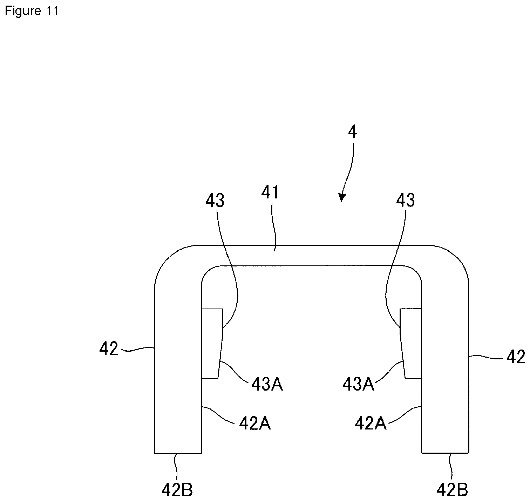

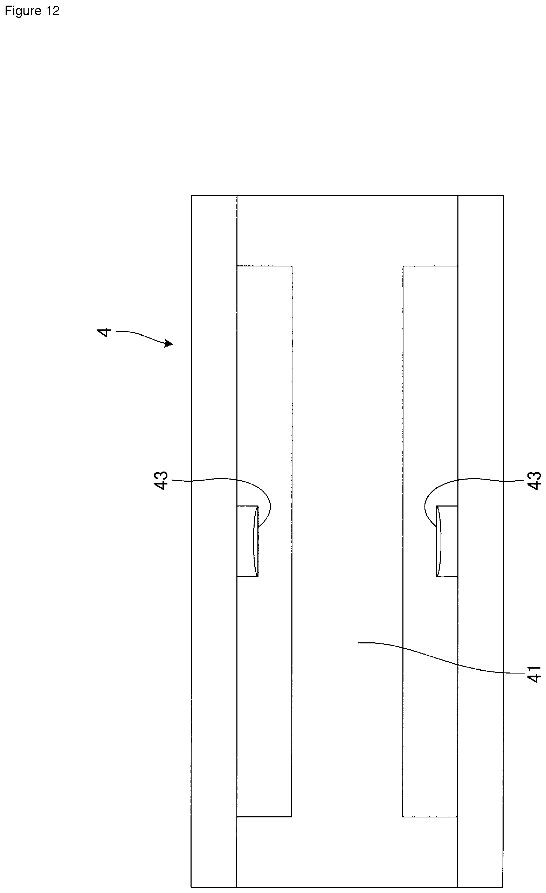

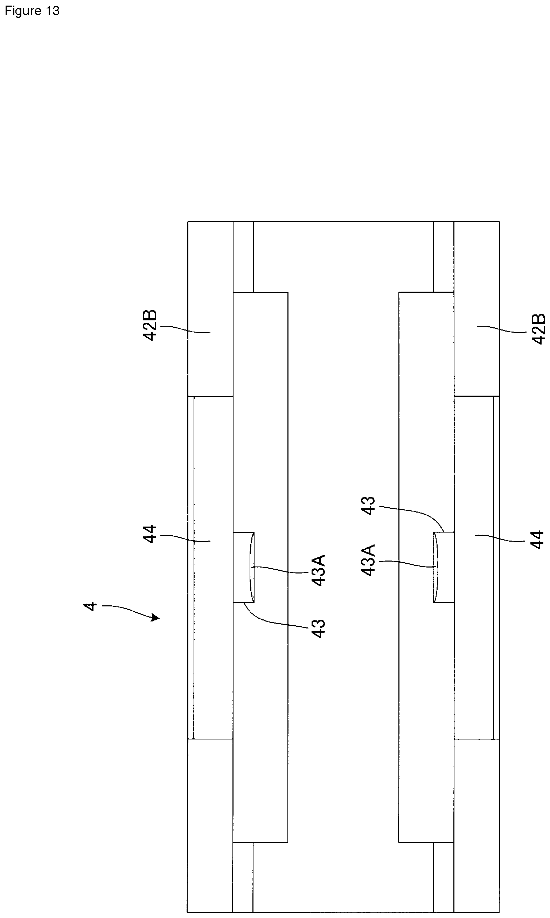

As shown in Fig. 9 to Fig. 14, the clip member 4 is a U-shaped cross-sectional member that consists of a top wall 41 and side walls 42 on both sides, and has a shape with a size so as to fit exactly with the clip mounting section 28 of the arm main body 23. Moreover, the clip member 4 has flexibility to a certain extent, and each of the side walls 42 of the clip member 4 can be deflected toward the side wall 42 on the opposite side. Note that, in the present embodiment, the clip member 4 is formed by a resin mold.

The connection protrusions 43 respectively project at inward-facing surfaces 42A of the side walls 42 on both sides of the clip member 4. The wiper blade 3 is connected to the wiper arm 2 via the clip member 4, by having these connection protrusions 43 fitted into the connection recesses 35 of the wiper blade 3, and the wiper blade 3 is rotatably supported around the connection protrusions 43 with respect to the wiper arm 2.

Note that, a downward inclined part 43A is formed at the top part of each of the connection protrusions 43. In this way, at the time when the wiper blade 3 is mounted on the clip member 4, the connection protrusions 43 can be introduced into the introduction grooves 36 from the inclined parts 43A, and can be smoothly fitted toward the connection recesses 35.

Cutout parts 44 are formed on lower edges 42B of both of the side walls 42 of the clip member 4. At the time when the clip member 4 is mounted on the wiper arm 2, the clip member 4 will be retained within the clip mounting section 28 of the arm main body 23, by having the retention sections 29 of the arm main body 23 fitted into the cutout parts 44.

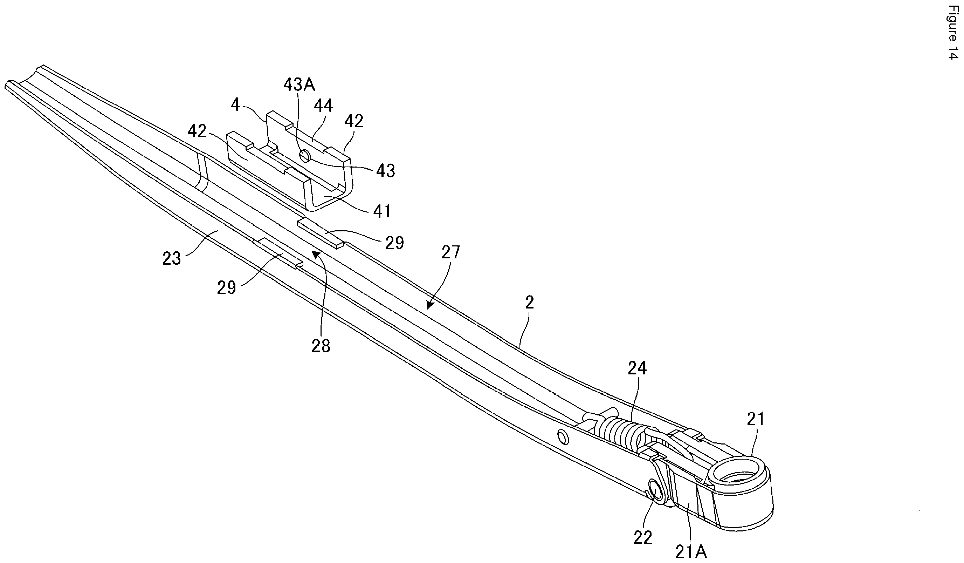

Figure 14 to Figure 16 show a mounting technique for attaching the clip member 4 within the clip mounting section 28 of the arm main body 23. In the mounting of the clip member 4, such as shown in Figure 14, the clip member 4 is inserted within the blade housing section 27 of the arm main body 23, from the top wall 41 side.

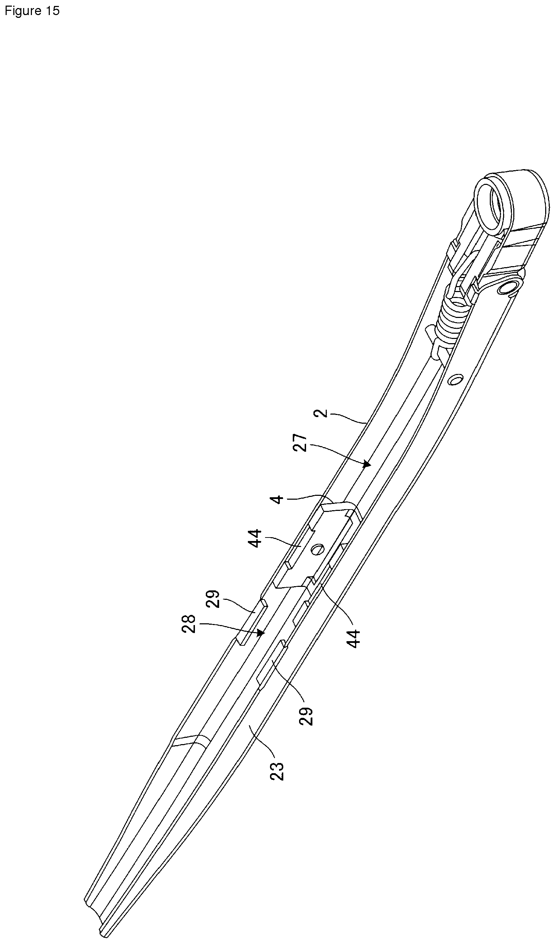

In this case, such as shown in Figure 15, the insertion position of the clip member 4 is not the clip mounting section 28, but is an adjacent position in the long direction with respect to the clip mounting section 28. In this way, the clip member 4 will not interfere with the retention sections 29 of the arm main body 23, at the time of the insertion work.

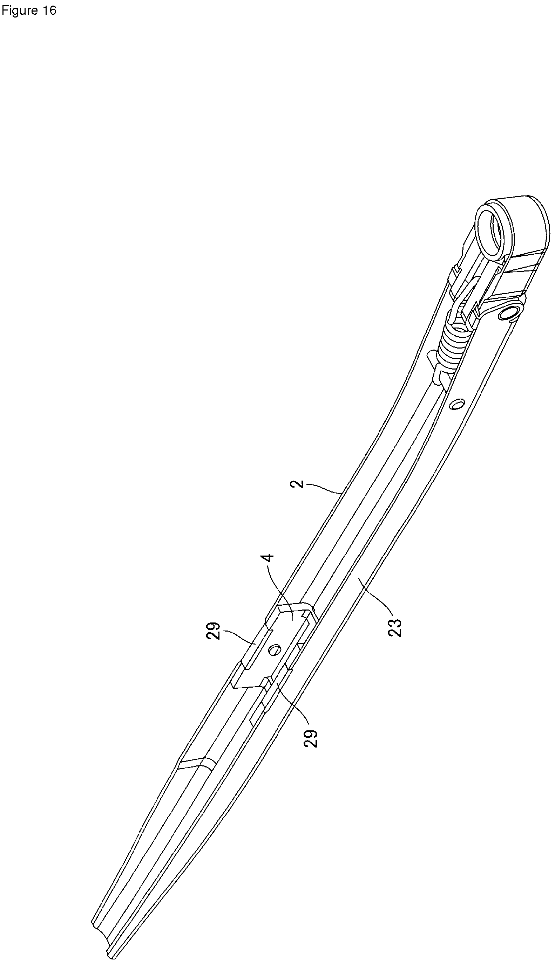

To continue, as shown in Figure 16, the clip member 4 is made to slide toward the clip mounting section 28. In this case, by making both of the side walls 42 of the clip member 4 deflect to the inside, the clip member 4 can be moved within the clip mounting section 28, by passing through the retention sections 29 provided on the clip mounting section 28. In this way, when the clip member 4 is arranged within the clip mounting section 28, the retention sections 29 will be fitted within the cutout parts 44 of the clip member 4, by returning the deflected shapes of both of the side walls 42 of the clip member 4 to the original shapes. In this way, the clip member 4 is appropriately retained within the clip mounting section 28, by the retention sections 29.

According to the wiper assembly 1 of the present embodiment, such as described above, the support section 32 made of resin of the wiper blade 3 is housed within the blade housing section 27 of the wiper arm 2 made of metal. Therefore, the support section 32 of the wiper blade 3 will be appropriately protected by the arm main body 23 with a high strength in terms of structure. Therefore, by using the support section 32 made of lightweight and inexpensive resin, a reduction in weight and a lowering of the manufacturing cost of the entire wiper assembly 1 can be achieved, and at the same time, the strength of the wiper assembly 1 in terms of structure can be secured.

Moreover, the plurality of projections 37 are provided on the support section 32 of the wiper blade 3, and the projections 37 come into contact with inward-facing surfaces 24A of the side walls 24 of the arm main body 23. Therefore, the support section 32 of the wiper blade 3 will be retained without looseness at an appropriate position within the blade housing section 27. In this way, damage or the like due to looseness of the wiper blade 3 can be effectively prevented, and the strength of the wiper assembly 1 in terms of structure can be increased. Moreover, the contact portions of the wiper blade 3 and the wiper arm 2 are only the projections 37, and the contact area can be made a necessary minimum. Therefore, the frictional resistance with respect to a rotation operation of the wiper blade 3 can be reduced, and an appropriate rotation operation of the wiper blade 3 can be secured at the time when using the wiper assembly 1.

Moreover, the projections 37 are provided at positions separated the farthest in the long direction from the connection recesses 35, in a range where the projections 37 are continuously in contact with the inward-facing surfaces 26B of the side walls 26 of the arm main body 2 at the time when the wiper blade 3 rotates with respect to the wiper arm 2. Therefore, in the case where an external force is applied in a horizontal direction with respect to the wiper blade 3, the external force will be received at the projections 37 at positions separated far away from the connection recesses 35 that are support points. As a result, the load applied to the support section 32 can be reduced, and damage to the wiper blade 3 can be appropriately prevented.

Note that, while the projections 37 are provided on the side surfaces 34 of the support section 32 in the above described embodiment, the present invention is not limited to such a mode, and projections may be provided on the inward-facing surfaces 26B of the side walls 26 of the arm main body 23, and these projections may come into contact with the side surfaces 34 of the support section 32.

Moreover, while the support section 32 of the wiper blade 3 retains the blade section 31 by the plurality of claw parts 33 in the above described embodiment, the present invention is not limited to such a mode. For example, the wiper blade 3 may have a support section and a blade section that are integrally formed.

Moreover, while the wiper blade 3 is attached to the wiper arm 2 via the clip member 4 in the above described embodiment, the present invention is not limited to such a mode. For example, the clip member 4 may not be provided between the wiper blade 3 and the wiper arm 2, and the wiper blade 3 may be directly attached to the wiper arm 2, via a connection shaft such as a rivet.

### [List of Reference Numerals]

- 1: wiper assembly
- 2: wiper arm
- 3: wiper blade
- 4: clip member
- 21: arm head
- 21A: head cover
- 22: connection pin
- 23: arm main body
- 24: spring
- 25: top wall of arm main body
- 26: side wall of arm main body
- 26A: lower edge of side wall
- 26B: inward-facing surface of side wall
- 27: blade housing section
- 28: clip mounting section
- 29: retention section
- 31: blade section
- 32: support section
- 33: claw part
- 34: side surface of support section
- 34A: upper edge of side surface
- 35: connection recess
- 36: introduction groove
- 37: projection
- 41: top wall of clip member
- 42: side wall of clip member
- 42A: inward-facing surface of side wall
- 42B: lower edge of side wall
- 43: connection protrusion
- 43A: inclined part of connection protrusion
- 44: cutout part

## Claims

1. A wiper assembly comprising a wiper blade and a wiper arm adapted to support the wiper blade,
the wiper blade including a wiping section adapted to wipe a surface to be wiped and a support section supporting the wiping section,
the wiper arm including a blade housing section configured to house at least a part of the support section,
wherein a portion constituting the blade housing section of the wiper arm is formed of a metallic material, and
wherein the support section of the wiper blade is formed of a non-metallic material.

2. The wiper assembly according to claim 1,
wherein the non-metallic material is resin.

3. The wiper assembly according to claim 1 or claim 2,
wherein projections are provided on one of the support section and the wiper arm and are adapted to contact with the other of the support section and the wiper arm.

4. The wiper assembly according to claim 3,
wherein the wiper blade is rotatably connected to the wiper arm about a connection section, and
wherein the projections provided on one of the support section and the wiper arm are disposed at positions farthest from the connection section in a range where the projections are kept in contact with the other of the support section and the wiper arm during the rotation of the wiper blade with respect to the wiper arm.
